# EUROPÄISCHE PATENTSCHRIFT

(11) **EP 4 384 731 B1**
(45) Veröffentlichungstag und Bekanntmachung des Hinweises auf die Patenterteilung: **22.04.2026**
(21) Anmeldenummer: 22757918.2
(22) Anmeldetag: 27.07.2022
(51) Int. Cl.: B62M 11/16, B62M 11/18, B62M 6/55

(54) **RADSATZANORDNUNG UND FAHRRADGETRIEBE**
GEAR SET ASSEMBLY AND BICYCLE GEARING SYSTEM
ENSEMBLE TRAIN D'ENGRENAGES ET SYSTÈME D'ENGRENAGE DE BICYCLETTE

(30) Priorität: 10.08.2021 DE 102021208705
(43) Veröffentlichungstag der Anmeldung: 19.06.2024
(73) Patentinhaber: ZF Friedrichshafen AG, 88046 Friedrichshafen (DE)
(72) Erfinder: ZIEMER, Peter, 86825 Bad Woerishofen (DE); RIEDISSER, Thomas, 88138 Sigmarszell (DE); DOEPFERT, Hagen, 88131 Lindau (DE); DOERR, Ulrich, 78467 Konstanz (DE); MARGRAF, Christoph, 88677 Markdorf (DE); DEPPERT, Reinhard, 97469 Gochsheim (DE); SCHRAFF, Uwe, 88677 Markdorf (DE); GRIMM, Sebastian, 71263 Weil der Stadt (DE); STROBEL, Markus, 88214 Ravensburg (DE); TIESLER, Harald, 88690 Uhldingen-Mühlhofen (DE); LIST, Matthias, 88045 Friedrichshafen (DE); GRUNDLER, Rainer, 78351 Bodman-Ludwigshafen (DE); LIPPENBERGER, Ingo, 88263 Horgenzell (DE)
(74) Vertreter: ZF Friedrichshafen AG
(86) Internationale Anmeldenummer: PCT/EP2022/071032
(87) Internationale Veröffentlichungsnummer: WO 2023/016800

(56) Entgegenhaltungen:
- EP-A1- 3 960 613
- DE-A1- 102016 225 169
- DE-A1- 102018 208 380
- DE-A1- 102018 208 381
- JP-A- 2018 136 020
- US-A1- 2005 197 230

## Beschreibung

### Technisches Gebiet

Die vorliegende Erfindung bezieht sich auf eine Radsatzanordnung für ein Planetengetriebe eines Fahrrads. Zudem bezieht sich die Erfindung auf ein Fahrradgetriebe.

### Stand der Technik

Die DE 10 2018 208 380 A1 beschreibt ein Mehrstufengetriebe in Planetenbauweise für ein Fahrrad oder Pedelec. Diese Mehrstufengetriebe weisen drei Planetenradsätze oder vier Planetenradsätze auf, um acht Gänge oder sechzehn Gänge bereitzustellen. Ein Planetenradsatz des Mehrstufengetriebes, welcher im Drehmomentfluss vorne oder hinten als Vorschaltradsatz oder Nachschaltradsatz angeordnet ist, kann dabei nur zwei Drehzahlen zur Veränderung eines Übersetzungsverhältnis zur Verfügung stellen.

### Darstellung der Erfindung

Ein erster Aspekt der Erfindung betrifft eine Radsatzanordnung für ein Planetengetriebe eines Fahrrads. Das Planetengetriebe kann beispielsweise dazu ausgebildet sein, in einem Tretlager des Fahrrads angeordnet zu sein. Die Radsatzanordnung weist eine Planetenbaugruppe auf. Die Planetenbaugruppe kann beispielsweise einen oder mehrere Planetenradsätze aufweisen.

Die Radsatzanordnung weist ein stationäres Bauteil auf. Zudem weist die Radsatzanordnung eine erste Bremse und eine zweite Bremse auf. Außerdem weist die Radsatzanordnung eine erste Freilaufkupplung und eine zweite Freilaufkupplung auf.

Das stationäre Bauteil kann beispielsweise ein Gehäuse des Getriebes oder auch ein Abschnitt eines Fahrradrahmens sein. Ein stationäres Bauteil kann beispielsweise ein relativ zu den Drehelementen des Getriebes unbewegliches Bauteil sein. Das stationäre Bauteil kann auch durch mehrere voneinander beabstandete Elemente gebildet sein.

Eine Bremse kann ein formschlüssiges oder reibschlüssiges Schaltelement sein. Die jeweiligen Bremsen können dazu ausgebildet sein, eine Rotation eines damit verbundenen Drehelements zu verhindern oder, beispielsweise bis zu einem Stopp, zu reduzieren. Die jeweiligen Bremsen können dazu ausgebildet sein, ein Drehelement drehfest mit dem stationären Bauteil zu verbinden, jedoch ohne dass das Drehelement permanent drehfest mit dem stationären Bauteil verbunden ist. Die Verbindung bzw. Festsetzung mittels der Bremse kann schaltbar sein. Die Bremsen können durch eine Schaltvorrichtung, beispielsweise mittels eines Kabelzugs einer Handschaltung, aktiv betätigt werden.

Eine Freilaufkupplung kann eine nur in eine Drehrichtung wirkende Kupplung sein. Zwei miteinander mittels einer Freilaufkupplung drehfest verbindbare Elemente sind in einer Drehrichtung dieser beiden Elemente relativ zueinander permanent drehfest miteinander verbunden. Drehfest miteinander verbundene Elemente laufen mit der gleichen Drehzahl. In einer entgegengesetzten relativen Drehrichtung, was auch einem Überholen des antreibenden Elements durch das angetriebene Element entsprechen kann, sind die beiden Elemente nicht mittels der Freilaufkupplung miteinander verbunden, sondern voneinander entkoppelt. Bei einer Umkehr der relativen Drehrichtung von einer Freilaufrichtung in eine Kupplungsrichtung kann die Freilaufkupplung selbsttätig sperren. Die Freilaufkupplung kann beispielsweise als Sperrklinkenfreilauf oder Klemmrollenfreilauf ausgebildet sein. Eine Freilaufkupplung kann ein Schaltelement sein, welches nicht aktiv geschaltet werden muss. Dadurch kann das Getriebe verschachtelter und kompakter sein. Beispielsweise wird eine Freilaufkupplung nicht betätigt und muss deshalb zum Betätigen nicht zugänglich sein. Dadurch kann eine Freilaufkupplung bei der Radsatzanordnung radial von außen von einer Hohlwelle oder einem anderen Drehelement eingefasst sein. Die Radsatzanordnung kann dazu ausgebildet sein, dass von dem Antrieb zu dem Abtrieb in jedem Gang ins Schnelle oder neutral übersetzt wird. Entsprechend können jeweilige Freilaufkupplungen orientiert sein.

Im Falle eines reibschlüssigen Schaltelements, wie einer Freilaufkupplung oder einer Bremse können, auch nach einem Schließen desselbigen, Drehzahlunterschiede zwischen den Bauelementen bestehen. Dieser gewollte oder auch ungewollte Zustand wird dennoch als drehfeste Verbindung der jeweiligen Bauelemente bezeichnet. Bei einer reibschlüssigen Verbindung kann beispielsweise aufgrund eines Schlupfs eine gewisse Drehzahldifferenz zwischen den zwei miteinander verbundenen Elementen vorliegen.

Die Radsatzanordnung ist zum Bereitstellen von drei Übersetzungen ausgebildet. Beispielsweise kann die Radsatzanordnung drei unterschiedliche Gänge bereitstellen. Diese Gänge können beispielsweise durch eine Betätigung jeweiliger Bremsen geschaltet werden. Beispielsweise stellt jeder Gang ein anderes Übersetzungsverhältnis bereit. Die Freilaufkupplungen können dabei selbsttätig ihren Zustand wechseln, so dass bei diesen keine aktive Betätigung für einen Gangwechsel notwendig ist. Bei jedem Gang kann ein festes mechanisches Übersetzungsverhältnis zwischen Eingang und Ausgang des Planetenradsatzes vorliegen, womit bei dem Fahrradgetriebe zusätzliche Gänge bereitgestellt werden können. Die Radsatzanordnung ist so besonders geeignet, einen Vorschaltradsatz oder Nachschaltradsatz bei einem Fahrradgetriebe zu bilden, um die Getriebespreizung und alternativ oder zusätzlich Getriebegangzahl mit einfachen Mitteln zu erhöhen. Bei jedem Gang kann ein festes mechanisches Übersetzungsverhältnis zwischen Eingang und Ausgang vorliegen. Die Radsatzanordnung kann dazu ausgebildet sein, mittels einem Planetenradsatz genau drei Übersetzungen bereitzustellen.

Die Planetenbaugruppe weist einen Planetenradsatz auf. Der Planetenradsatz weist ein als Sonnenrad ausgebildetes erstes Drehelement, ein zweites Drehelement und ein drittes Drehelement auf. Das zweite Element ist im Falle eines Minus-Planetenradsatzes als ein Hohlrad und im Falle eines Plus-Planetenradsatzes als ein Planetenträger ausgebildet. Das dritte Element ist im Falle eines Minus-Planetenradsatzes als ein Planetenträger und im Falle eines Plus-Planetenradsatzes als ein Hohlrad ausgebildet. Ein Minus-Planetenradsatz hat eine negative und ein Plus-Planetenradsatz eine positive Standübersetzung. An dem Planetenträger können Planetenräder drehbar gelagert sein. Je nach Bauweise kann ein Radsatz ein oder mehrere Sätze von Planetenrädern aufweisen. Jeweilige Planetenräder eines Planetenradsatzes können mit dessen Hohlrad und dessen Sonnenrad kämmen. Sofern mehrere Sätze von Planetenräder vorhanden sind, können jeweils auch nur die Planetenräder eines Satzes mit dem Sonnenrad und die Planetenräder eines anderen Satzes mit dem Hohlrad kämmen. Jeweilige Planetenräder der zwei Planetenradsätze können dann paarweise miteinander kämmen.

Die Planetenbaugruppe weist einen Antrieb auf, an welchem beispielsweise die zu übersetzende Größe in die Radsatzanordnung eingespeist werden kann. Die Planetenbaugruppe weist einen Abtrieb auf, an welchem beispielsweise die durch die Radsatzanordnung übersetzte Größe ausgegeben werden kann. Der Abtrieb kann beispielsweise mit einem Hinterrad des Fahrrads mechanisch wirkverbunden sein, beispielsweise mittels einer Fahrradkette oder eines Riemens. Das Getriebe kann eine Antriebswelle aufweisen, die an einem Ende den Antrieb ausbilden kann. Der Abtrieb kann durch eine Abtriebswelle ausgebildet sein, die achsparallel oder auch koaxial zum Antrieb vorgesehen sein kann. Die Abtriebswelle kann an einem Ende den Abtrieb ausbilden. Der Antrieb der Planetenbaugruppe kann einem Eingang oder Antrieb des Getriebes entsprechen. Alternativ kann der Abtrieb der Planetenbaugruppe einem Ausgang oder Abtrieb des Getriebes entsprechen. Die Planetenbaugruppe kann dazu ausgebildet sein, ein Drehmoment vom Antrieb zum Abtrieb zu übertragen. Die Übertragung kann dabei mit drei unterschiedlichen Übersetzungen erfolgen. Die Radsatzanordnung kann dazu ausgebildet sein, ein Drehmoment zu übertragen.

Üblicherweise ist ein Fahrradgetriebe nur für das Bereitstellen eines Antriebsmoments in eine Drehrichtung ausgebildet, da mit einem Fahrrad nur vorwärts gefahren wird. Insofern unterscheidet sich ein Fahrradgetriebe bereits von üblichen Kraftfahrzeuggetrieben. Das Getriebe kann beispielsweise dazu ausgebildet sein, in eine entgegengesetzte Drehrichtung kein Drehmoment übertragen zu können. Beispielsweise weist das Fahrradgetriebe auch keine Möglichkeit auf, eine Drehrichtung des Abtriebs relativ zum Antrieb, beispielsweise durch Schaltung einer Fahrtrichtungswechselbaugruppe, wechseln zu können.

Das erste Drehelement ist mittels der ersten Bremse an dem stationären Bauteil festsetzbar. Das erste Drehelement ist mittels der ersten Freilaufkupplung mit dem Abtrieb drehfest verbindbar. Das zweite Drehelement ist mittels der zweiten Bremse an dem stationären Bauteil festsetzbar. Das zweite Drehelement ist mittels der zweiten Freilaufkupplung mit dem Abtrieb drehfest verbindbar. Das dritte Drehelement ist permanent drehfest mit dem Antrieb verbunden. Beispielsweise kann das dritte Drehelement mit dem Antrieb verschraubt sein oder einstückig ausgebildet sein. Das dritte Drehelement und der Antrieb können durch eine gemeinsame Welle ausgebildet sein. Die Radsatzanordnung ist so zum Bereitstellen von drei Übersetzungen zwischen dem Antrieb und dem Abtrieb ausgebildet. Dazu sind nur zwei aktiv betätigbare Schaltelemente in Form der Bremsen notwendig, wodurch die Radsatzanordnung kompakt und einfach in ein Fahrradgetriebe integrierbar ist. Es ist kein weiterer Planetenradsatz erforderlich, um bei ansonsten bekannten Fahrradgetrieben zusätzliche Gänge bereitzustellen. Weitere Planetenradsätze bedingen einen höheren Aufwand und benötigten mehr Bauraum, was so vermieden werden kann.

Die Radsatzanordnung kann so mit einem einzigen Planetenradsatz zwei statt drei Übersetzungen bereitstellen. Für eine erste Übersetzung sind beide Bremsen geöffnet. Die beiden Freilaufkupplungen wirken dann in Sperrrichtung. Eine Übersetzung kann in diesem Fall beispielsweise eins betragen. Durch ein Schließen der ersten Bremse kann zu einer im Vergleich hierzu erhöhten Übersetzung gewechselt werden. Die erste Freilaufkupplung befindet sich dann im Überholtriebzustand und die zweite Freilaufkupplung wirkt weiter in Sperrrichtung. Durch ein Öffnen der ersten Bremse und ein Schließen der zweiten Bremse kann zu einer im Vergleich hierzu nochmal erhöhten Übersetzung gewechselt werden. Die erste Freilaufkupplung wirkt dann in Sperrrichtung und die zweite Freilaufkupplung befindet sich dann im Überholtriebzustand.

In einer Ausführungsform des Getriebes ist es vorgesehen, dass der Planetenradsatz als Minus-Planetenradsatz ausgebildet ist. Das zweite Drehelement kann als Hohlrad ausgebildet sein. Das dritte Drehelement kann als Planetenträger ausgebildet sein. Bei Minus-Planetenradsätzen ist ein Satz von Planetenrädern üblicherweise ausreichend, wodurch sich Kosten- und Reibungsvorteile ergeben können. Jeweilige Planetenräder eines Planetenradsatzes können bei dem Minus-Planetenradsatz mit dessen Hohlrad und dessen Sonnenrad kämmen. Zudem kann der mit dem Antrieb verbundene Planetenträger einen scheibenförmigen Bereich ausbilden, an welchem einfach eine Drehmomentsensierung möglich ist. Der Planetenträger kann mit dem Antrieb einstückig ausgebildet sein, beispielsweise als gemeinsame Welle. Der Planetenträger kann mit dem Antrieb beispielsweise auch permanent drehfest verbunden sein.

In einer Ausführungsform des Getriebes ist es vorgesehen, dass der Planetenradsatz als Plus-Planetenradsatz ausgebildet ist. Das zweite Drehelement kann als Planetenträger ausgebildet sein. Das dritte Drehelement kann als Hohlrad ausgebildet sein. Der Plus-Planetenradsatz kann zwei Sätze von Planetenrädern aufweisen. Die Planetenräder eines Satzes können mit dem Sonnenrad und die Planetenräder eines anderen Satzes mit dem Hohlrad kämmen. Jeweilige Planetenräder der zwei Sätze von Planetenrädern können dann paarweise miteinander kämmen.

In einer Ausführungsform des Getriebes ist es vorgesehen, dass das Sonnenrad geteilt ausgebildet ist. Das Sonnenrad kann in axialer Richtung unterbrochen sein. Das Sonnenrad kann ein erstes Sonnenradelement und ein zweites Sonnenradelement aufweisen. Beide Sonnenradelemente können beispielsweise identisch ausgebildet sein. Sonstige Drehelemente können einstückig und alternativ oder zusätzlich ungeteilt ausgebildet sein. Das geteilte Sonnenrad kann eine Verbindung des Planetenträgers bei der Bauweise mit Minus-Planetenradsatz mit dem Antrieb radial innenseitig ermöglichen. Die Radsatzanordnung kann so besonders kompakt sein. Zudem kann so der Planetenträger trotz der Minus-Planetenradsatzbauweise mit dem Antrieb einfach verbunden werden. Die jeweiligen Planetenräder des Minus-Planetenradsatzes können beispielsweise mit beiden Sonnenradelementen kämmen.

In einer Ausführungsform des Getriebes ist es vorgesehen, dass das Hohlrad geteilt ausgebildet ist. Das Hohlrad kann in axialer Richtung unterbrochen sein. Das Hohlrad kann also ein erstes Hohlradelement und ein zweites Hohlradelement aufweisen. Beide Hohlradelemente können beispielsweise identisch ausgebildet sein. Sonstige Drehelemente können einstückig und alternativ oder zusätzlich ungeteilt ausgebildet sein. Das geteilte Hohlrad kann eine Verbindung des Planetenträgers bei der Bauweise mit Minus-Planetenradsatz mit dem Antrieb radial außenseitig ermöglichen. So kann der Planetenträger einen scheibenförmigen Bereich aufweisen, welcher axial außen angeordnet ist. Eine Drehmomentsensierung ist bei dieser Bauweise einfach möglich. Die jeweiligen Planetenräder des Minus-Planetenradsatzes können beispielsweise mit beiden Hohlradelementen kämmen.

In einer Ausführungsform des Getriebes ist es vorgesehen, dass die erste Bremse und die zweite Bremse dazu ausgebildet sind, gleichzeitig betätigbar zu sein, um die Planetenbaugruppe zu blockieren. Im blockierten Zustand können beispielsweise alle Drehelemente eines Planetenradsatzes an einer Rotation gehindert sein. Die blockierte Planetenbaugruppe kann kein Drehmoment übertragen. Dadurch kann eine Diebstahl- und alternativ oder zusätzlich Wegfahrsicherung bereitgestellt werden. Diese Funktion kann also zusätzlich zu den drei Gängen mit jeweils unterschiedlicher Übersetzung als weiterer Schaltzustand der Radsatzanordnung bereitgestellt werden.

Alternativ können die erste Bremse und die zweite Bremse beispielsweise als Doppelschaltelement ausgebildet sein, welche nur wechselseitig betätigbar sind. Dadurch kann die Betätigung besonders einfach sein und die Radsatzanordnung zudem besonders kompakt sein.

In einer Ausführungsform des Getriebes ist es vorgesehen, dass die erste Freilaufkupplung dazu ausgebildet ist, bei geschlossener zweiter Bremse selbsttätig in den Sperrrichtungszustand zu wechseln. Die erste Freilaufkupplung kann dazu ausgebildet sein, bei geschlossener erster Bremse selbsttätig in den Überholtriebzustand zu wechseln. Bei umgekehrter Schaltung der Bremsen kann sich ein umgekehrter Zustand der Freilaufkupplungen ergeben. Beispielsweise kann die erste Freilaufkupplung bei geöffneter erster Bremse selbsttätig in den Sperrrichtungszustand wechseln.

In einer Ausführungsform des Getriebes ist es vorgesehen, dass die zweite Freilaufkupplung dazu ausgebildet ist, bei geschlossener erster Bremse selbsttätig in den Sperrrichtungszustand zu wechseln. Die zweite Freilaufkupplung kann dazu ausgebildet sein, bei geschlossener zweiter Bremse selbsttätig in den Überholtriebzustand zu wechseln. Bei umgekehrter Schaltung der Bremsen kann sich ein umgekehrter Zustand der Freilaufkupplungen ergeben.

Die Radsatzanordnung kann frei von weiteren Planetenradsätzen sein. Die jeweiligen Radsätze können frei von weiteren Elementen, wie weiteren Hohlrädern, Planetenträgern, Planetenrädern und Sonnenrädern, sein. Beispielsweise weist die Planetenbaugruppe und auch das Getriebe in einer Ausführungsform keine weiteren außer den hier beschriebenen Planetenradsätzen auf. Ebenso kann die Radsatzanordnung in einer Ausführungsform keine weiteren Stirnradstufen außer den jeweiligen hier beschriebenen Stirnradstufen aufweisen. Bei der Radsatzanordnung und auch dem Getriebe kann es vorgesehen sein, dass dessen gesamte Planetenbaugruppe oder zumindest alle Planetenradsätze gemeinsam als Planetenwalze ausgebildet sind und somit nur koaxiale Elemente aufweist.

Ein zweiter Aspekt der Erfindung betrifft ein Fahrradgetriebe. Das Fahrradgetriebe weist eine Radsatzanordnung gemäß dem ersten Aspekt auf. Jeweilige weitere Merkmale, Ausführungsformen und Vorteile sind den Beschreibungen des ersten Aspekts zu entnehmen.

Das Fahrradgetriebe kann einen Antrieb und einen Abtrieb aufweisen. Das Fahrradgetriebe kann einen Hauptradsatz aufweisen, welcher in Reihe mit der Radsatzanordnung zur Drehmomentübertragung verbunden ist. Der Hauptradsatz kann ein oder mehrere Planetenradsätze aufweisen. Das Fahrradgetriebe kann dazu ausgebildet sein, ein Drehmoment von dem Antrieb über die jeweiligen Radsätze an den Abtrieb zu übertragen. Der Antrieb der Radsatzanordnung kann beispielsweise mit dem Antrieb des Fahrradgetriebes permanent drehfest verbunden sein oder diesen ausbilden. Alternativ kann der Abtrieb der Radsatzanordnung beispielsweise mit dem Abtrieb des Fahrradgetriebes permanent drehfest verbunden sein oder diesen ausbilden. Zum Übertragen eines Drehmoments kann es erforderlich sein, dass ein oder mehrere Schaltelemente und alternativ oder zusätzlich Bremsen betätigt werden müssen.

Der Hauptradsatz kann beispielsweise wie folgt ausgebildet sein. Der Hauptradsatz kann wenigstens einen Antrieb und wenigstens einen Abtrieb aufweisen. Die Radsatzanordnung kann mit dem Antrieb oder dem Abtrieb des Hauptradsatzes zur Drehmomentübertragung verbunden sein. Der Hauptradsatz kann einen ersten Planetenradsatz und einen zweiten Planetenradsatz aufweisen. Die zwei Planetenradsätze können als Minus-Planetenradsätze ausgebildet sein. Der erste Planetenradsatz kann ein erstes Sonnenrad, einen ersten Planetenträger und ein erstes Hohlrad aufweisen. Der zweite Planetenradsatz kann ein zweites Sonnenrad, einen zweiten Planetenträger und ein zweites Hohlrad aufweisen. Jeweilige Planetenträger können eine oder mehrere daran drehbar gelagerte Planetenräder aufweisen, welche mit dem jeweiligen Sonnenrad und dem jeweiligen Hohlrad des Planetenradsatzes kämmen.

Die Nummerierung der Drehelemente und der Planetenradsätze kann dabei lediglich der Zuordnung dienen. Insofern können erste Drehelemente Teil des ersten Planetenradsatzes und zweite Drehelemente Teil des zweiten Planetenradsatzes sein. Entsprechend kann der erste Planetenradsatz einen ersten Satz von Planetenrädern aufweisen, welche auch jeweils als erste Planetenräder bezeichnet werden können. Entsprechend kann der zweite Planetenradsatz einen zweiten Satz von Planetenrädern aufweisen, welche auch jeweils als zweite Planetenräder bezeichnet werden können.

Das Fahrradgetriebe kann zudem eine dritte Bremse, eine vierte Bremse, eine dritte Freilaufkupplung und eine vierte Freilaufkupplung aufweisen, um jeweilige Übersetzungsstufen des Hauptradsatzes zu schalten. Auch hier dient die Nummerierung lediglich der Zuordnung. Das gesamte Fahrradgetriebe kann also vier Bremsen und vier Freilaufkupplungen aufweisen. Zudem kann das Fahrradgetriebe den Hauptradsatz und die Radsatzanordnung bzw. drei Planetenradsätze aufweisen.

Der Antrieb des Fahrradgetriebes kann mit dem ersten Planetenträger drehfest verbunden sein. Der erste Planetenträger kann somit den Antrieb des Hauptradsatzes bilden. Das erste Hohlrad kann mit dem dritten Drehelement der Radsatzanordnung und damit dessen Antrieb permanent drehfest verbunden sein. Das erste Sonnenrad kann mit dem zweiten Planetenträger permanent drehfest verbunden sein. Der Antrieb des Fahrradgetriebes und der erste Planetenträger sind mittels der dritten Freilaufkupplung mit dem zweiten Sonnenrad drehfest verbindbar. Das zweite Sonnenrad ist mittels der dritten Bremse an dem stationären Bauteil festsetzbar. Das zweite Hohlrad ist mittels der vierten Bremse an dem stationären Bauteil festsetzbar. Das zweite Hohlrad ist mittels der vierten Freilaufkupplung mit dem dritten Drehelement der Radsatzanordnung und damit dessen Antrieb drehfest verbindbar. In diesem Beispiel bildet der Antrieb des Hauptradsatzes den Antrieb des Fahrradgetriebes und der Abtrieb der Radsatzanordnung den Abtrieb des Fahrradgetriebes. Der Hauptradsatz ist somit antriebsseitig zu der Radsatzanordnung angeordnet. Es ist jedoch auch eine umgekehrte Verbindung in Reihe und im Drehmomentfluss möglich.

Jeweilige Planetenradsätze können frei von zusätzlichen, nicht beschriebenen Elementen sein. Das Fahrradgetriebe kann frei von zusätzlichen, nicht beschriebenen Planetenradsätzen, Schaltelementen und Bremsen sein.

Das Fahrradgetriebe kann eine Schaltvorrichtung aufweisen. Die Schaltvorrichtung kann beispielsweise einen Kabelzug und einen Schalthebel aufweisen, womit an dem Kabelzug zum Schalten beispielsweise gezogen werden kann. Die Schaltvorrichtung kann aber auch elektrische Stellmotoren zum Betätigen jeweiliger Bremsen aufweisen. Beispielsweise kann die Schaltvorrichtung eine Steuervorrichtung mit einem Mikrocontroller aufweisen.

**In** einer Ausführungsform ist es vorgesehen, dass das Getriebe einen Elektromotor aufweist. Mittels des Elektromotors kann beispielsweise ein von dem Elektromotor erzeugbares Drehmoment an dem Abtrieb des Fahrradgetriebes und alternativ oder zusätzlich an dem Antrieb des Fahrradgetriebes bereitstellbar sein. Das Fahrradgetriebe kann auch als Antriebsvorrichtung mit einem Elektromotor ausgebildet sein. Das Getriebe mit Elektromotor kann ein motorisch unterstütztes Fahrrad ermöglichen und beispielsweise in einem Pedelec verwendet werden. Der Elektromotor kann dazu ausgebildet sein, eine elektrische Energie in ein Antriebsmoment umzuwandeln. Das Fahrradgetriebe kann auch eine Steuervorrichtung und eine Stromquelle, wie eine Batterie, für den Elektromotor aufweisen.

In einer Ausführungsform ist es vorgesehen, dass das Fahrradgetriebe eine Tretkurbelwelle aufweist. Das Fahrradgetriebe kann dazu ausgebildet sein, dass ein Drehmoment von der Tretkurbelwelle an den Antrieb des Fahrradgetriebes übertragbar ist. Die Tretkurbelwelle kann beispielsweise in einem Tretlagergehäuse des Fahrrads gelagert sein. Die Tretkurbelwelle kann beispielsweise dazu ausgebildet sein, dass an der Tretkurbelwelle jeweilige Kurbeln mit Pedalen zum Antreiben des Fahrrads wenigstens teilweise mittels Muskelkraft bewegbar sind. Die Tretkurbelwelle kann beispielsweise permanent mit dem Antrieb mechanisch wirkverbindbar sein oder mit dem Antrieb permanent mechanisch wirkverbunden sein. Beispielsweise kann der Antrieb des Fahrradgetriebes durch die gleiche Welle gebildet sein, wie die Tretkurbelwelle. Die Tretkurbelwelle kann als der Antrieb ausgebildet sein. Die Tretkurbelwelle kann aber beispielsweise auch mittels eines weiteren Schaltelements, wie einer Freilaufkupplung, und alternativ oder zusätzlich einer Stirnradstufe mit dem Antrieb verbunden bzw. verbindbar sein. Die Tretkurbelwelle kann sich axial auf einer zentralen Drehachse des Fahrradgetriebe zentral vollständig durch das Getriebe erstrecken.

Das Getriebe kann einen Drehmomentsensor aufweisen. Der Drehmomentsensor kann zur Erfassung eines an der Tretkurbelwelle anliegenden Drehmoments ausgebildet sein. Der Drehmomentsensor kann alternativ oder zusätzlich zur Erfassung eines an dem Antrieb des Fahrradgetriebes anliegenden Drehmoments ausgebildet sein. Die Gänge und alternativ oder zusätzlich eine Antriebsleistung des Elektromotors können beispielsweise in Abhängigkeit von jeweiligen erfassten Drehmomenten gesteuert werden.

### Kurze Beschreibung der Figuren

Fig. 1 zeigt in einer schematischen Ansicht eine erste Ausführungsform einer Radsatzanordnung für ein Planetengetriebe eines Fahrrads, welche einen Plus-Planetenradsatz aufweist.
Fig. 2 zeigt in einer schematischen Ansicht eine zweite Ausführungsform einer Radsatzanordnung für ein Planetengetriebe eines Fahrrads, welche einen Minus-Planetenradsatz aufweist.
Fig. 3 zeigt in einer schematischen Ansicht eine dritte Ausführungsform einer Radsatzanordnung für ein Planetengetriebe eines Fahrrads, welche ebenfalls einen Minus-Planetenradsatz aufweist.
Fig. 4 zeigt in einer schematischen Ansicht ein Fahrradgetriebe mit einer Radsatzanordnung gemäß Fig. 1.
Fig. 5 veranschaulicht eine Schaltlogik des Getriebe gemäß Fig. 4.

### Detaillierte Beschreibung von Ausführungsformen

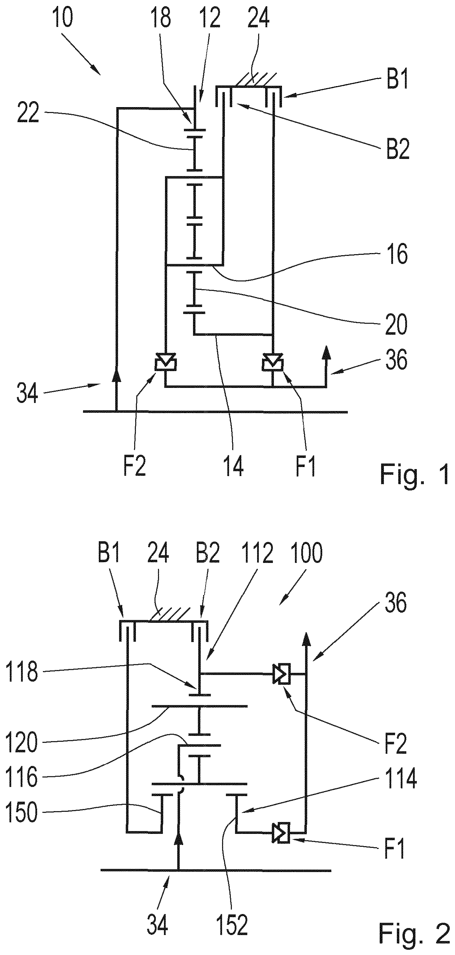

Fig. 1 zeigt in einer schematischen Ansicht eine erste Ausführungsform einer Radsatzanordnung 10. Die Radsatzanordnung 10 weist einen Planetenradsatz 12 auf, welcher als Plus-Planetenradsatz ausgebildet ist. Der Planetenradsatz 12 weist ein Sonnenrad 14, einen Planetenträger 16 und ein Hohlrad 18 auf. An dem Planetenträger 16 ist ein radial innerer Satz von Planetenrädern 20 und ein radial äußerer Satz von Planetenrädern 22 drehbar gelagert. Die radial inneren Planetenräder 20 kämmen mit dem Sonnenrad 14. Die radial äußeren Planetenräder 22 kämmen mit dem Hohlrad 18. Die radial inneren Planetenräder 20 kämmen paarweise mit den radial äußeren Planetenrädern 22.

Die Radsatzanordnung 10 weist zudem ein stationäres Bauteil 24, eine erste Bremse B1, eine zweite Bremse B2, eine erste Freilaufkupplung F1 und eine zweite Freilaufkupplung F2. Ein Antrieb 34 der Radsatzanordnung 10 wird durch eine zentrale Welle gebildet und ist permanent drehfest mit dem Hohlrad 18 verbunden. Ein Abtrieb 36 der Radsatzanordnung 10 wird durch eine dazu radial außen angeordnete Hohlwelle gebildet.

Mittels der ersten Bremse B1 ist das Sonnenrad 14 an dem stationären Bauteil 24 festsetzbar. Mittels der zweiten Bremse B2 ist der Planetenträger 16 an dem stationären Bauteil 24 festsetzbar. Mittels der ersten Freilaufkupplung F1 ist das Sonnenrad 14 mit dem Abtrieb 36 drehfest verbindbar. Mittels der zweiten Freilaufkupplung F2 ist der Planetenträger 16 mit dem Abtrieb 36 drehfest verbindbar.

Entsprechend ergibt sich eine erste Übersetzungsstufe, bei welchem die erste Bremse B1 und die zweite Bremse B2 offen sind. Sofern ein Drehmoment an dem Antrieb 34 angelegt wird, wechseln die erste Freilaufkupplung F1 und die zweite Freilaufkupplung F2 in den Sperrrichtungszustand. Der Planetenradsatz 12 ist so verblockt und der Abtrieb 36 dreht mit der gleichen Geschwindigkeit wie der Antrieb 34. Wenn nun der Planetenträger 16 durch die zweite Bremse B2 festgehalten wird, wechselt die zweite Freilaufkupplung F2 selbsttätig in den Überholtriebzustand. Somit ist nur noch das Sonnenrad 14 mittels der ersten Freilaufkupplung F1 mit dem Abtrieb 36 verbunden und eine Eingangsgröße wird ins Schnelle übersetzt. Wenn stattdessen das Sonnenrad 14 durch die erste Bremse B1 festgehalten wird, wechselt die erste Freilaufkupplung F1 selbsttätig in den Überholtriebzustand. Somit ist nur noch der Planetenträger 16 mittels der zweiten Freilaufkupplung F2 mit dem Abtrieb 36 verbunden und eine Eingangsgröße wird ebenfalls ins Schnelle übersetzt. Damit werden drei Übersetzungsstufen bereitgestellt. Zusätzlich werden in einem weiteren Zustand die erste Bremse B1 und die zweite Bremse B2 geschlossen. Dadurch wird der Planetenradsatz blockiert und eine Diebstahlsicherung realisiert.

Wie in Fig. 1 zu erkennen ist, umgreift die Verbindung von Antrieb 34 und Hohlrad 18, welche als Teil des Hohlrads 18 ausgebildet ist, den Planetenradsatz 12 antriebsseitig und erstreckt sich radial scheibenförmig an einem antriebsseitigsten axialen Ende des Planetenradsatzes 12. Dort kann einfach eine Drehmomentsensierung angeschlossen werden.

Fig. 2 zeigt in einer schematischen Ansicht eine zweite Ausführungsform einer Radsatzanordnung 100. Die Radsatzanordnung 100 ist in Funktion gleich zu der ersten Ausführungsform und hat die gleichen Schaltzustände. Es werden deshalb lediglich relevante Unterschiede erläutert. Die Radsatzanordnung 100 weist einen anders gestalten Planetenradsatz 112 auf. Der Planetenradsatz 112 ist als Minus-Planetenradsatz ausgebildet. Der Planetenradsatz 112 weist ein Sonnenrad 114, einen Planetenträger 116 und ein Hohlrad 118 auf. An dem Planetenträger 116 ist nur ein Satz von Planetenrädern 120 drehbar gelagert. Die Planetenräder 120 kämmen mit dem Sonnenrad 114 und dem Hohlrad 118.

Bei der Radsatzanordnung 100 ist der Planetenträger 116 permanent drehfest mit dem Antrieb 34 verbunden. Zu diesem Zweck ist das Sonnenrad 114 zweiteilig ausgebildet. Das Sonnenrad 114 weist ein axial antriebsseitiges erstes Sonnenradelement 150 und ein axial abtriebsseitiges zweites Sonnenradelement 152 auf. Beide Sonnenradelemente 150, 152 kämmen mit den Planetenrädern 120, deren Verzahnungen eine entsprechende axiale Erstreckung aufweisen. Die sich radial erstreckende Verbindung des Antriebs 34 mit dem Planetenträger 116 ist axial zwischen dem ersten Sonnenradelement 150 und dem zweiten Sonnenradelement 152 angeordnet.

Das Sonnenrad 114 ist mittels der ersten Bremse B1 an dem stationären Bauteil 24 festsetzbar. Das Hohlrad 118 ist mittels der zweiten Bremse B2 an dem stationären Bauteil 24 festsetzbar. Das Sonnenrad 114 ist mittels der ersten Freilaufkupplung F1 mit dem Abtrieb 36 drehfest verbindbar. Das Hohlrad 118 ist mittels der zweiten Freilaufkupplung F2 mit dem Abtrieb 36 drehfest verbindbar.

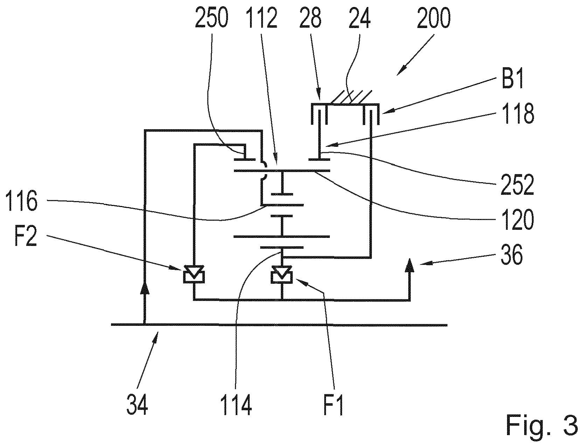

Fig. 3 zeigt in einer schematischen Ansicht eine dritte Ausführungsform einer Radsatzanordnung 200. Die Radsatzanordnung 200 ist in Funktion gleich zu der zweiten Ausführungsform und hat die gleichen Schaltzustände und weist ebenfalls einen als Minus-Planetenradsatz ausgebildeten Planetenradsatz 112 auf. Es werden deshalb lediglich relevante Unterschiede erläutert.

Bei dem Planetenradsatz 112 der dritten Ausführungsform ist der Antrieb 34 radial von außen permanent drehfest mit dem Planetenträger 116 verbunden, statt radial von innen wie bei der zweiten Ausführungsform. Entsprechend ist das Sonnenrad 114 in der dritten Ausführungsform einteilig ausgebildet und das Hohlrad 118 zweiteilig. Das Hohlrad 118 weist in der dritten Ausführungsform ein axial antriebsseitiges erstes Hohlradelement 250 und ein axial abtriebsseitiges zweites Hohlradelement 252 auf. Beide Hohlradelemente 250, 252 kämmen mit den Planetenrädern 120, deren Verzahnungen eine entsprechende axiale Erstreckung aufweisen. Die sich radial erstreckende Verbindung des Antriebs 34 mit dem Planetenträger 116 ist axial zwischen dem ersten Hohlradelement 250 und dem zweiten Hohlradelement 252 angeordnet.

Die Verbindung von Antrieb 34 und Planetenträger 116 bei der dritten Ausführungsform, welche als Teil des Planetenträgers 116 ausgebildet ist, umgreift den Planetenradsatz 112 antriebsseitig und erstreckt sich radial scheibenförmig an einem antriebsseitigen axialen Ende des Planetenradsatzes 112. Dort kann einfach eine Drehmomentsensierung angeschlossen werden.

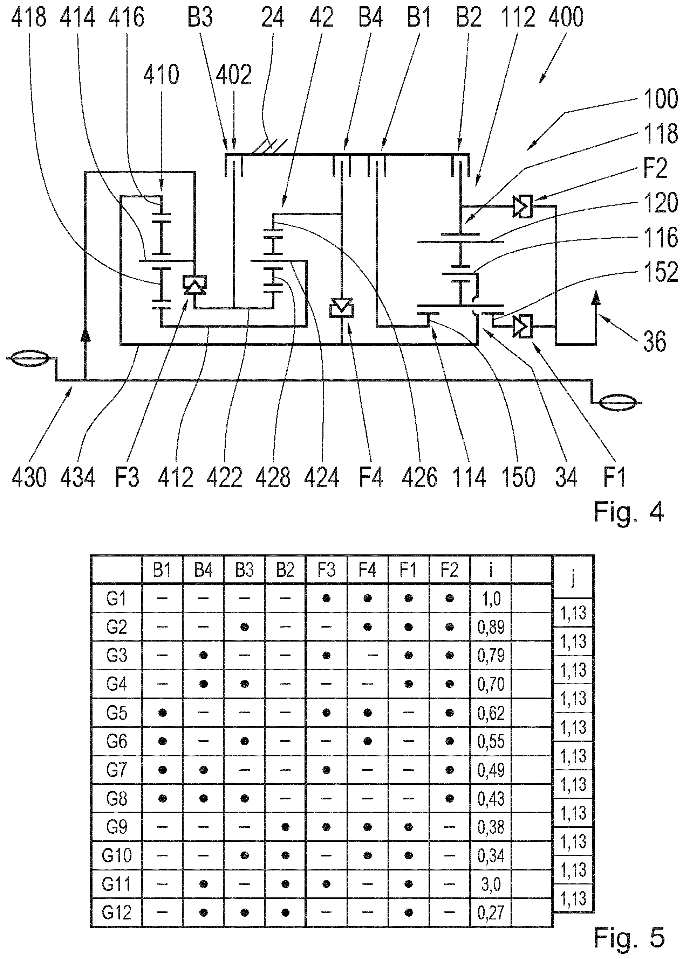

Fig. 4 zeigt in einer schematischen Ansicht ein Fahrradgetriebe 400 mit einer Radsatzanordnung 100 gemäß der ersten Ausführungsform, welche im Drehmomentfluss einem Hauptradsatz 402 des Fahrradgetriebes 400 nachgeordnet ist. Statt der Radsatzanordnung 100 gemäß der ersten Ausführungsform sind in anderen Ausführungsformen die Radsatzanordnung 10 oder die Radsatzanordnung 200 verbaut. Zudem weist das Fahrradgetriebe 400 einen Hauptradsatz 402, eine dritte Bremse B3, eine vierte Bremse B4, eine dritte Freilaufkupplung F3 und eine vierte Freilaufkupplung F4 auf.

Der Hauptradsatz 402 weist einen ersten Planetenradsatz 410 und einen zweiten Planetenradsatz 420 auf. Der erste Planetenradsatz 410 weist ein erstes Sonnenrad 412, einen ersten Planetenträger 414 und ein erstes Hohlrad 416 auf. An dem ersten Planetenträger 414 sind erste Planetenräder 418 drehbar gelagert, welche mit dem ersten Sonnenrad 412 und dem ersten Hohlrad 416 kämmen. Der zweite Planetenradsatz 420 weist ein zweites Sonnenrad 422, einen zweiten Planetenträger 424 und ein zweites Hohlrad 426 auf. An dem zweiten Planetenträger 424 sind zweite Planetenräder 428 drehbar gelagert, welche mit dem zweiten Sonnenrad 422 und dem zweiten Hohlrad 426 kämmen. Beide Planetenradsätze 410, 420 des Hauptradsatzes 402 sind als Minus-Planetenradsätze ausgebildet.

Der erste Planetenträger 414 ist permanent drehfest mit einem Antrieb 430 des Fahrradgetriebes 400 verbunden, welcher als Tretkurbelwelle ausgebildet ist. Das erste Sonnenrad 412 ist mit dem zweiten Planetenträger 424 permanent drehfest verbunden. Der erste Planetenträger 414 ist mittels der dritten Freilaufkupplung F3 mit dem zweiten Sonnenrad 422 drehfest verbindbar. Das erste Hohlrad 416 ist mit dem Planetenträger 116 der Radsatzanordnung 100 über eine Hohlwelle 434 verbunden, welche den Antrieb 34 der Radsatzanordnung 100 ausbildet. Das zweite Sonnenrad 422 ist mittels der dritten Bremse B3 an dem stationären Bauteil 24 festsetzbar. Das zweite Hohlrad 426 ist mittels der vierten Bremse B4 an dem stationären Bauteil 24 festsetzbar. Zudem ist das zweite Hohlrad 426 mittels der vierten Freilaufkupplung F4 mit der Hohlwelle 434 und damit dem Planetenträger 116 der Radsatzanordnung 100 drehfest verbindbar.

Der Abtrieb 36 der Radsatzanordnung 100 bildet auch den Abtrieb des Fahrradgetriebes 400. Der Abtrieb 36 ist zur Drehmomentübertragung mit einem hinteren Laufrad eines Fahrrads verbindbar.

Fig. 5 veranschaulicht eine Schaltlogik der Fahrradgetriebes 400, wobei nur die vier Bremsen B1, B2, B3 und B4 aktiv geschaltet werden. Die vier Freilaufkupplungen F1, F2, F3 und F4 ändern im angetriebenen Zustand des Fahrradgetriebes 400 selbsttätig deren Zustand. Mit dem Fahrradgetriebe 400 können beispielsweise zwölf Gänge mit jeweils unterschiedlicher Übersetzung bereitgestellt werden, welche mit G1 bis G12 durchnummeriert sind. Eine Gesamtgetriebespreizung kann beispielsweise 3,77 betragen.

In den Zeilen sind für jeden Gang die Schaltzustände gezeigt. Für die Bremsen bedeuten Punkte einen geschlossenen Zustand, bei welchem ein Element drehfest mit dem stationären Bauteil verbunden werden und somit festgesetzt werden soll. Ein Strich bedeutet eine geöffnete Bremse. Für die Freilaufkupplungen bedeutet ein Strich einen Überholtriebzustand und ein Punkt einen Sperrrichtungszustand. In der mit "i" kenntlich gemachten Spalte ist für jeden Gang die Übersetzung angegeben. In der mit "j" kenntlich gemachten Spalte ist die Getriebespreizung zwischen zwei benachbarten Gängen angegeben. In jedem Gang wechseln diejenigen der Freilaufkupplungen in den Überholtriebzustand, bei welchen die Bremse mit korrespondierender Nummer geschlossen ist.

In Gang G1 sind alle vier Bremsen B1, B2, B3, B4 geöffnet. Entsprechend befinden sich alle vier Freilaufkupplungen F1, F2, F3, F4 im Sperrrichtungszustand.

In Gang G2 wurde die dritte Bremse B3 geschlossen. Entsprechend hat die dritte Freilaufkupplung F3 in den Überholtriebzustand gewechselt.

In Gang G3 wurde stattdessen die vierte Bremse B4 geschlossen. Entsprechend hat die vierte Freilaufkupplung F4 in den Überholtriebzustand gewechselt.

In Gang G4 wurden die dritte Bremse B3 und die vierte Bremse B4 geschlossen. Entsprechend hat die dritte Freilaufkupplung F3 und die vierte Freilaufkupplung F4 in den Überholtriebzustand gewechselt.

In Gang G5 ist nur die erste Bremse B1 geschlossen. Entsprechend hat nur die erste Freilaufkupplung F1 in den Überholtriebzustand gewechselt.

In Gang G6 wurden die dritte Bremse B3 und die erste Bremse B1 geschlossen. Entsprechend hat die dritte Freilaufkupplung F3 und die erste Freilaufkupplung F1 in den Überholtriebzustand gewechselt.

In Gang G7 wurden die vierte Bremse B4 und die erste Bremse B1 geschlossen. Entsprechend hat die vierte Freilaufkupplung F4 und die erste Freilaufkupplung F1 in den Überholtriebzustand gewechselt.

In Gang G8 wurden die vierte Bremse B4, die dritte Bremse B3 und die erste Bremse B1 geschlossen. Entsprechend hat die vierte Freilaufkupplung F4, die dritte Freilaufkupplung F3 und die erste Freilaufkupplung F1 in den Überholtriebzustand gewechselt.

In Gang G9 ist nur die zweite Bremse B2 geschlossen. Entsprechend hat nur die zweite Freilaufkupplung F2 in den Überholtriebzustand gewechselt.

In Gang G10 wurden die dritte Bremse B3 und die zweite Bremse B2 geschlossen. Entsprechend hat die dritte Freilaufkupplung F3 und die zweite Freilaufkupplung F2 in den Überholtriebzustand gewechselt.

In Gang G11 wurden die vierte Bremse B4 und die zweite Bremse B2 geschlossen. Entsprechend hat die vierte Freilaufkupplung F4 und die zweite Freilaufkupplung F2 in den Überholtriebzustand gewechselt.

In Gang G12 wurden die vierte Bremse B4, die dritte Bremse B3 und die zweite Bremse B2 geschlossen. Entsprechend hat die vierte Freilaufkupplung F4, die dritte Freilaufkupplung F3 und die zweite Freilaufkupplung F2 in den Überholtriebzustand gewechselt.

### Bezugszeichen

- 10; 100; 200: Radsatzanordnung
- 12; 112: Planetenradsatz
- 14; 114: Sonnenrad
- 16; 116: Planetenträger
- 18; 118: Hohlrad
- 20: innerer Satz von Planetenrädern
- 22: äußerer Satz von Planetenrädern
- 24: stationäres Bauteil
- 34: Antrieb
- 36: Abtrieb
- 120: Satz von Planetenrädern
- 150, 152: Sonnenradelemente
- 250, 252: Hohlradelemente
- 400: Fahrradgetriebe
- 402: Hauptradsatz
- 410, 420: Planetenradsätze
- 412, 422: Sonnenrad
- 414, 424: Planetenträger
- 416, 426: Hohlrad
- 418, 428: Planetenräder
- 434: Hohlwelle
- B1, B2, B3, B4: Bremsen
- F1, F2, F3, F4: Freilaufkupplungen
- G1-G12: Gänge

## Patentansprüche

1. Radsatzanordnung (10) für ein Planetengetriebe eines Fahrrads mit einer Planetenbaugruppe, einem stationären Bauteil (24), einer ersten Bremse (B1), einer zweiten Bremse (B2), einer ersten Freilaufkupplung (F1) und einer zweiten Freilaufkupplung (F2), wobei die Planetenbaugruppe einen Antrieb (34), einen Abtrieb (36) und einen Planetenradsatz (12) mit einem als Sonnenrad (14) ausgebildeten ersten Drehelement, einem zweiten Drehelement und einem dritten Drehelement aufweist, wobei das erste Drehelement mittels der ersten Bremse (B1) an dem stationären Bauteil (24) festsetzbar ist, das erste Drehelement mittels der ersten Freilaufkupplung (F1) mit dem Abtrieb (36) drehfest verbindbar ist, das zweite Drehelement mittels der zweiten Bremse (B2) an dem stationären Bauteil (24) festsetzbar ist, das dritte Drehelement permanent drehfest mit dem Antrieb (34) verbunden ist und wobei die Radsatzanordnung (10) zum Bereitstellen von drei Übersetzungen zwischen dem Antrieb (34) und dem Abtrieb (36) ausgebildet ist, **dadurch gekennzeichnet, dass** das zweite Drehelement mittels der zweiten Freilaufkupplung (F2) mit dem Abtrieb (36) drehfest verbindbar ist.

2. Radsatzanordnung (100; 200) nach Anspruch 1, **dadurch gekennzeichnet, dass** der Planetenradsatz (112) als Minus-Planetenradsatz ausgebildet ist, wobei das zweite Drehelement als Hohlrad (118) ausgebildet ist und das dritte Drehelement als Planetenträger (116).

3. Radsatzanordnung (10) nach Anspruch 1, **dadurch gekennzeichnet, dass** der Planetenradsatz (12) als Plus-Planetenradsatz ausgebildet ist, wobei das zweite Drehelement als Planetenträger (16) ausgebildet ist und das dritte Drehelement als Hohlrad (18).

4. Radsatzanordnung (100) nach Anspruch 2, **dadurch gekennzeichnet, dass** das Sonnenrad (114, 150, 152) geteilt ausgebildet ist.

5. Radsatzanordnung (200) nach Anspruch 2, **dadurch gekennzeichnet, dass** das Hohlrad (118, 250, 252) geteilt ausgebildet ist.

6. Radsatzanordnung (10; 100; 200) nach einem der vorhergehenden Ansprüche, **dadurch gekennzeichnet, dass** die erste Bremse (B1) und die zweite Bremse (B2) dazu ausgebildet sind, gleichzeitig betätigbar zu sein, um die Planetenbaugruppe zu blockieren.

7. Radsatzanordnung (10; 100; 200) nach einem der vorhergehenden Ansprüche, **dadurch gekennzeichnet, dass** die erste Freilaufkupplung (F1) dazu ausgebildet ist, bei geschlossener zweiter Bremse (B2) selbsttätig in den Sperrrichtungszustand zu wechseln.

8. Radsatzanordnung (10; 100; 200) nach einem der vorhergehenden Ansprüche, **dadurch gekennzeichnet, dass** die zweite Freilaufkupplung (F2) dazu ausgebildet ist, bei geschlossener erster Bremse (B1) selbsttätig in den Sperrrichtungszustand zu wechseln.

9. Fahrradgetriebe (400) mit einer Radsatzanordnung (10; 100; 200) nach einem der vorhergehenden Ansprüche.

## Claims

1. Gear set arrangement (10) for a planetary gear system of a bicycle, comprising a planetary assembly, a stationary component (24), a first brake (B1), a second brake (B2), a first freewheel clutch (F1) and a second freewheel clutch (F2), wherein the planetary assembly comprises a drive (34), an output (36) and a planetary gear set (12) having a first rotating element in the form of a sun gear (14), a second rotating element and a third rotating element, wherein the first rotating element can be fixed to the stationary component (24) by means of the first brake (B1), the first rotating element can be rotationally fixedly connected to the output (36) by means of the first freewheel clutch (F1), the second rotating element can be fixed to the stationary component (24) by means of the second brake (B2), the third rotating element is permanently rotationally fixedly connected to the drive (34) and wherein the gear set arrangement (10) is designed to provide three gear ratios between the drive (34) and the output (36), **characterized in that** the second rotating element can be rotationally fixedly connected to the output (36) by means of the second freewheel clutch (F2).

2. Gear set arrangement (100; 200) according to Claim 1, **characterized in that** the planetary gear set (112) is in the form of a minus planetary gear set, wherein the second rotating element is in the form of a ring gear (118) and the third rotating element is in the form of a planet carrier (116).

3. Gear set arrangement (10) according to Claim 1, **characterized in that** the planetary gear set (12) is in the form of a plus planetary gear set, wherein the second rotating element is in the form of a planet carrier (16) and the third rotating element is in the form of a ring gear (18).

4. Gear set arrangement (100) according to Claim 2, **characterized in that** the sun gear (114, 150, 152) is divided.

5. Gear set arrangement (200) according to Claim 2, **characterized in that** the ring gear (118, 250, 252) is divided.

6. Gear set arrangement (10; 100; 200) according to any of the preceding claims, **characterized in that** the first brake (B1) and the second brake (B2) are designed to be simultaneously operable in order to block the planetary assembly.

7. Gear set arrangement (10; 100; 200) according to any of the preceding claims, **characterized in that** the first freewheel clutch (F1) is designed to automatically change over to the locking direction state when the second brake (B2) is closed.

8. Gear set arrangement (10; 100; 200) according to any of the preceding claims, **characterized in that** the second freewheel clutch (F2) is designed to automatically change over to the locking direction state when the first brake (B1) is closed.

9. Bicycle gear system (400) having a gear set arrangement (10; 100; 200) according to any of the preceding claims.

## Revendications

1. Ensemble train d'engrenages (10) pour un engrenage planétaire d'une bicyclette avec un ensemble planétaire, un composant fixe (24), un premier frein (B1), un deuxième frein (B2), un premier embrayage à roue libre (F1) et un deuxième embrayage à roue libre (F2), l'ensemble planétaire comportant un entraînement (34), une sortie (36) et un train d'engrenages planétaire (12) avec un premier élément rotatif formé comme une roue solaire (14), un deuxième élément rotatif et un troisième élément rotatif, le premier élément rotatif pouvant être fixé sur le composant fixe (24) au moyen du premier frein (B1), le premier élément rotatif pouvant être relié de manière solidaire en rotation à la sortie (36) au moyen du premier embrayage à roue libre (F1), le deuxième élément rotatif pouvant être fixé sur le composant fixe (24) au moyen du deuxième frein (B2), le troisième élément rotatif étant relié de manière solidaire en rotation en permanence à l'entraînement (34) et l'ensemble train d'engrenages (10) étant formé pour fournir trois rapports entre l'entraînement (34) et la sortie (36), **caractérisé en ce que** le deuxième élément rotatif peut être relié de manière solidaire en rotation à la sortie (36) au moyen du deuxième embrayage à roue libre (F2).

2. Ensemble train d'engrenages (100 ; 200) selon la revendication 1, **caractérisé en ce que** le train d'engrenages planétaire (112) est formé comme un train d'engrenages planétaire négatif, le deuxième élément rotatif étant formé comme une couronne (118) et le troisième élément rotatif étant formé comme un porte-satellites (116).

3. Ensemble train d'engrenages (10) selon la revendication 1, **caractérisé en ce que** le train d'engrenages planétaire (12) est formé comme un train d'engrenages planétaire positif, le deuxième élément rotatif étant formé comme un porte-satellites (16) et le troisième élément rotatif étant formé comme une couronne (18).

4. Ensemble train d'engrenages (100) selon la revendication 2, **caractérisé en ce que** la roue solaire (114, 150, 152) est divisée.

5. Ensemble train d'engrenages (200) selon la revendication 2, **caractérisé en ce que** la couronne (118, 250, 252) est divisée.

6. Ensemble train d'engrenages (10 ; 100 ; 200) selon l'une des revendications précédentes, **caractérisé en ce que** le premier frein (B1) et le deuxième frein (B2) sont formés pour pouvoir être actionnés simultanément pour bloquer l'ensemble planétaire.

7. Ensemble train d'engrenages (10 ; 100 ; 200) selon l'une des revendications précédentes, **caractérisé en ce que** le premier embrayage à roue libre (F1) est formé pour passer de manière autonome dans l'état de direction de verrouillage lorsque le deuxième frein (B2) est fermé.

8. Ensemble train d'engrenages (10 ; 100 ; 200) selon l'une des revendications précédentes, **caractérisé en ce que** le deuxième embrayage à roue libre (F2) est formé pour passer de manière autonome dans l'état de direction de verrouillage lorsque le premier frein (B1) est fermé.

9. Engrenage de bicyclette (400) avec un ensemble train d'engrenages (10 ; 100 ; 200) selon l'une des revendications précédentes.
